# EUROPEAN PATENT APPLICATION

(11) **EP 4 779 928 A1**
(43) Date of publication of application: **22.07.2026**
(21) Application number: 24880144.1
(22) Date of filing: 17.10.2024
(51) Int. Cl.: H04L 9/40, H04W 8/24, H04L 67/00, H04L 67/306

(54) **METHOD AND APPARATUS FOR NEGOTIATING QUANTUM TOLERANT ENCRYPTION ALGORITHM BY ESIM DEVICE AND PROFILE SERVER**

(30) Priority: 17.10.2023 KR 20230138370
(71) Applicant: Samsung Electronics Co., Ltd., Suwon-si, Gyeonggi-do 16677 (KR)
(72) Inventor: YOON, Kangjin, Suwon-si, Gyeonggi-do 16677 (KR); KANG, Sujung, Suwon-si, Gyeonggi-do 16677 (KR)
(74) Representative: Gulde & Partner
(86) International application number: PCT/KR2024/015760
(87) International publication number: WO 2025/084807

(57) **Abstract**

The disclosure relates to a 5G or 6G communication system for supporting a higher data transmission rate. According to an embodiment of the disclosure, a method performed by a terminal in a wireless communication system includes transmitting, to a profile server, a mutual authentication initiation request message including at least one of information indicating that an embedded universal integrated circuit card (eUICC) of the terminal supports post-quantum cryptography (PQC) or information on a PQC-related capability supported by the eUICC; in response to the mutual authentication initiation request message, receiving, from the profile server, a mutual authentication initiation response message; and based on the mutual authentication initiation response message, identifying a session key encryption scheme with the profile server.

## Description

### [Technical Field]

The disclosure relates to a method and an apparatus for installing and managing an embedded universal integrated circuit card (eUICC) profile.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of wireless communication systems, various services can be provided, and accordingly there is a need for ways to effectively provide these services.

A universal integrated circuit card (UICC) is a smart card that is inserted into a mobile communication UE for use, and is also referred to as a UICC card. The UICC may include an access control module for a UE to access a network of a mobile communication operator. Examples of the access control module may include a universal subscriber identity module (USIM), a subscriber identity module (SIM), and an IP multimedia service identity module (ISIM). A UICC including a USIM is commonly referred to as a USIM card. Similarly, a UICC including a SIM is commonly referred to as a SIM card.

Among UICCs, a UICC fixed to a UE for use is referred to as an embedded UICC (eUICC). Typically, an eUICC may refer to a UICC card that is fixed to a UE for use and enables remote downloading and selection of a SIM. SIM information to be downloaded is collectively referred to as an eUICC profile or more simply a profile.

Post-quantum cryptography (PQC) is an asymmetric key-based encryption technology using public and private key pairs, designed to replace existing cryptographic systems that are vulnerable to decryption by quantum computers and specific algorithms. Accordingly, PQC is gaining attention as a new cryptographic system as quantum computers, which exhibit superior performance in solving integer-based problems, are expected to be unable to easily decrypt existing cryptographic systems within polynomial time. Types of PQC include multivariate-based cryptography, code-based cryptography, lattice-based cryptography, isogeny-based cryptography, and a hash-based cryptographic algorithm.

### [Disclosure]

### [Technical Problem]

With development of quantum computing technologies, there has been an increased risk of malicious attackers eavesdropping on communications between a UE and a profile server, decrypting encrypted information, and stealing a user's profile and network security keys. To effectively respond to such threats, there is a growing need to enhance the security of a remote SIM provisioning operation through an eSIM.

The disclosure is to provide a method and a device for a UE to select a communication service and connect to a network in a communication system.

The disclosure is to provide a method and a device for downloading, installing, and managing a profile for a UE to connect to a network online in a communication system.

The technical subjects pursued in the disclosure may not be limited to the above-mentioned technical subjects, and other technical subjects which are not mentioned herein may be clearly understood from the following description by those skilled in the art to which the disclosure pertains.

### [Technical Solution]

According to an embodiment of the disclosure, a method performed by a terminal in a wireless communication system is provided. The method includes transmitting, to a profile server, a mutual authentication initiation request message including at least one of information indicating that an embedded universal integrated circuit card (eUICC) of the terminal supports post-quantum cryptography (PQC) or information on a PQC-related capability supported by the eUICC; in response to the mutual authentication initiation request message, receiving, from the profile server, a mutual authentication initiation response message; and based on the mutual authentication initiation response message, identifying a session key encryption scheme with the profile server.

According to an embodiment of the disclosure, a method performed by a profile server in a wireless communication system is provided. The method includes receiving, from a terminal, a mutual authentication initiation request message including at least one of information indicating that an eUICC of the terminal supports PQC or information on a PQC-related capability supported by the eUICC; and in response to the mutual authentication initiation request message, transmitting, to the terminal, a mutual authentication initiation response message. A session key encryption scheme with the terminal is identified according to the mutual authentication initiation response message.

According to an embodiment of the disclosure, a terminal in a wireless communication system, the terminal includes a transceiver and a processor coupled with the transceiver. The processor is configured to transmit, to a profile server via the transceiver, a mutual authentication initiation request message including at least one of information indicating that an eUICC of the terminal supports PQC or information on a PQC-related capability supported by the eUICC, in response to the mutual authentication initiation request message, receive, from the profile server via the transceiver, a mutual authentication initiation response message, and based on the mutual authentication initiation response message, identify a session key encryption scheme with the profile server.

According to an embodiment of the disclosure, a profile server in a wireless communication system is provided. The profile server includes a transceiver and a processor coupled with the transceiver. The transceiver is configured to receive, from a terminal via the transceiver, a mutual authentication initiation request message including at least one of information indicating that an eUICC of the terminal supports PQC or information on a PQC-related capability supported by the eUICC, and in response to the mutual authentication initiation request message, transmit, to the terminal via the transceiver, a mutual authentication initiation response message. A session key encryption scheme with the terminal is identified according to the mutual authentication initiation response message.

### [Advantageous Effects]

According to an embodiment of the disclosure, when a UE intends to communicate with a profile server using a post-quantum cryptography scheme and download a profile in a communication system, the UE may provide the profile server with a post-quantum cryptography scheme and parameters supported by the UE, may receive a scheme that is supported by both the UE and the profile server from the profile server, may generate a common session key using the post-quantum cryptography scheme supported by both the UE and the profile server, and may download and install a profile.

According to an embodiment of the disclosure, in a communication system, a profile server may receive a post-quantum cryptography scheme and parameters supported by a UE from the UE, may select a scheme supported by both the profile server and the UE to provide the same to the UE, may generate a common session key by using the post-quantum cryptography scheme supported by both the profile server and the UE, and may encrypt a profile to transmit the same to the UE.

Advantageous effects obtainable from the disclosure may not be limited to the above-mentioned effects, and other effects which are not mentioned herein may be clearly understood from the following description by those skilled in the art to which the disclosure pertains.

### [Description of Drawings]

FIG. 1 is a diagram illustrating a method in which a UE connects to a mobile communication network by using a UICC having a fixed profile according to an embodiment of the disclosure.
FIG. 2 is a diagram illustrating an example of a connection between a UE, a provisioning mediation server, a profile provisioning server, and a service provider according to an embodiment of the disclosure.
FIG. 3 is a sequence diagram illustrating an example of a procedure in which a UE performs a capability negotiation with a profile server to download a profile according to an embodiment of the disclosure.
FIG. 4 is a sequence diagram illustrating an example of a procedure in which a UE performs a capability negotiation with a profile server to download a profile according to an embodiment of the disclosure.
FIG. 5 is a sequence diagram illustrating an example of a procedure in which a UE configures a session key with a profile server to download a profile according to an embodiment of the disclosure.
FIG. 6 is a sequence diagram illustrating an example of a procedure in which a UE configures a session key with a profile server to download a profile according to an embodiment of the disclosure.
FIG. 7 is a block diagram illustrating components of a UE according to an embodiment of the disclosure.
FIG. 8 is a block diagram illustrating components of a profile server according to an embodiment of the disclosure.

### [Mode for Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

Particular terms as used in the following description are merely provided to help understanding of the disclosure, and other types of terms may be used without departing from the scope of the technical idea of the disclosure.

In the disclosure, a universal integrated circuit card (UICC) is a smart card that is inserted into a mobile communication terminal for use, and may also be referred to as a UICC card.

The UICC may refer to a chip that stores personal information on a mobile communication subscriber, such as network access authentication information, a telephone directory, or a short message service (SMS), and enables secure use of mobile communication by performing subscriber authentication and generating a traffic security key when accessing a mobile communication network, such as global system for mobile communication (GSM), wideband code division multiple access (WCDMA), or long-term evolution (LTE)/new radio (NR).

The UICC may include a communication application or an access control module for a terminal to access a network of a mobile communication operator. Examples of the communication application or the access control module may include a universal subscriber identity module (USIM), a subscriber identity module (SIM), and an IP multimedia service identity module (ISIM). The UICC may provide a high-level security function for installing various applications, such as an electronic wallet, a ticketing application, or an electronic passport.

A UICC including a USIM is commonly referred to as a USIM card. Similarly, a UICC including a SIM is commonly referred to as a SIM card.

In the disclosure, "SIM card," "UICC card," "USIM card," and "UICC including an ISIM" may be used with the same or similar meanings. For example, content of the disclosure may be applied equally to a SIM card, a USIM card, an ISIM card, or a general UICC card.

A SIM card stores personal information on a mobile communication subscriber, and enables secure use of mobile communication by performing subscriber authentication and generating a traffic security key when accessing a mobile communication network.

Generally, the SIM card is manufactured as a dedicated card for a particular mobile communication operator by request of the operator, and may be released with authentication information of the operator for network access, for example, a universal subscriber identity module (USIM) application, an international mobile subscriber identity (IMSI), a K value, and an OPc value, loaded in advance. The mobile communication operator receives the SIM card and provides the SIM card for a subscriber. If necessary, it is possible to manage, for example, install, modify, or delete, an application in a UICC card using an over-the-air (OTA) technology or the like. The subscriber may insert the UICC card into a mobile communication terminal to use a network and an application service of the mobile communication operator. When the existing terminal is replaced with a new terminal, the subscriber may insert the UICC card into the new terminal, thereby using the same authentication information, mobile phone number, and personal contacts as stored in the UICC card in the new terminal.

However, the SIM card inconveniences a mobile communication terminal user in receiving a service from a different mobile communication operator. The mobile communication terminal user inconveniently needs to physically obtain a SIM card in order to receive a service from the mobile communication operator. For example, when traveling to a foreign country, a local SIM card needs to be inconveniently obtained in order to receive a local mobile communication service. A roaming service may solve this inconvenience to some extent, but entails relatively expensive rates, and may not be received if there is no contract made between communication service providers.

This inconvenience may be largely solved by remotely downloading and installing a SIM in the UICC card. For example, the user is able to download a SIM of a mobile communication service for use to the UICC card at a desired time. The UICC card may be used by downloading and installing a plurality of SIMs and selecting only one SIM among the SIMs for use. The UICC card may or may not be fixed to the terminal. In particular, a UICC fixed to a terminal for use is referred to as an embedded UICC (eUICC). Typically, an eUICC may refer to a UICC card that is fixed to a terminal for use and enables remote downloading and selection of a SIM. In the disclosure, a UICC card that enables remote downloading and selection of a SIM is referred to as an eUICC. For example, among UICC cards that enable remote downloading and selection of a SIM, UICC cards fixed or not fixed to a terminal are collectively referred to as eUICCs. In addition, SIM information to be downloaded may be collectively referred to as a term "eUICC profile" or more simply "profile."

In the disclosure, an eUICC may be a chip-type security module embedded in a terminal rather than a detachable type that is insertable into and removable from a terminal. Generally, the eUICC may be fixed to a terminal for user. The eUICC is capable of downloading and installing a profile using OTA technology. The eUICC may be referred to as a UICC capable of downloading and installing a profile.

In the disclosure, a method for downloading and installing a profile in an eUICC using OTA technology may also be applied to a detachable UICC that is insertable into and removable from a terminal. For example, an embodiment of the disclosure may apply to a UICC capable of downloading and installing a profile using OTA technology.

In the disclosure, a "UICC" may be used interchangeably with a "SIM," and an "eUICC" may be used interchangeably with an "eSIM."

In the disclosure, a "profile" may refer to a packaged software form of an application, a file system, and an authentication key value stored in a UICC.

In the disclosure, a "USIM profile" may have the same meaning as a "profile," or may refer to a packaged software form of information included in a USIM application in a profile.

In the disclosure, an operation of a terminal enabling a profile may refer to an operation of changing a state of the profile to enabled, thereby configuring the terminal to receive a communication service through a communication operator that has provided the profile. A profile in an enabled state may be referred to as an "enabled profile."

In the disclosure, an operation of a terminal disabling a profile may refer to an operation of changing a state of the profile to disabled, thereby configuring the terminal to be unable to receive a communication service through a communication operator that has provided the profile. A profile in a disabled state may be referred to as a "disabled profile."

In the disclosure, an operation of a terminal deleting a profile may refer to an operation of changing a state of the profile to deleted, thereby configuring the terminal to no longer enable or disable the profile. A profile in a deleted state may be referred to as a "deleted profile."

In the disclosure, an operation of a terminal enabling, disabling, or deleting a profile may refer to an operation of first marking each profile as to-be-enabled, to-be-disabled, or to-be-deleted rather than immediately changing a state of each profile to enabled, disabled, or deleted and changing each profile to enabled, disabled, or deleted after the terminal or a UICC of the terminal performs a specific operation (e.g., executing a REFRESH or RESET command). An operation of marking a specific profile as a to-be state (e.g., a to-be-enabled state, a to-be-disabled state, or a to-be-deleted state) is not necessarily limited to marking a single profile as a single to-be state, and may be marking one or more profiles as the same or different to-be states, marking one profile as one or more to-be states, or marking one or more profiles as the same or different one or to-be states, respectively.

When a terminal marks one or more to-be states for an arbitrary profile, two to-be states may be integrated and marked as a single state. For example, when an arbitrary profile is marked as to-be-disabled and to-be-deleted, the profile may also be marked as to-be-disabled and deleted in an integrated manner.

Operations of a terminal marking a to-be state for one or more profiles may be performed sequentially or simultaneously. Further, operations of a terminal marking a to-be state for one or more profiles and then changing an actual state of the profiles may be performed sequentially or simultaneously.

In the disclosure, a "profile provisioning server" may include a function of generating a profile, encrypting a generated profile, generating a profile remote management command, or encrypting a generated profile remote management command. The profile provisioning server may be referred to as a subscription manager data preparation (SM-DP), a subscription manager data preparation plus (SM-DP+), an off-card entity of profile domain, a profile encryption server, a profile generation server, a profile provisioner (PP), a profile provider, or a profile provisioning credentials (PPC) holder.

In the disclosure, a "profile management server" may include a function of managing a profile. The profile management server may be referred to as a subscription manager secure routing (SM-SR), a subscription manager secure routing plus (SM-SR+), an off-card entity of eUICC profile manager, a profile management credentials (PMC) holder, an eUICC manager (EM), or a profile manager (PM).

In the disclosure, the profile provisioning server may refer to a server that encompasses functions of the profile management server. Therefore, in various embodiments of the disclosure, an operation of the profile provisioning server may be performed by the profile management server. Similarly, an operation of the profile management server or the SM-SR may be performed in the profile providing server.

In the disclosure, a "provisioning mediation server" may be referred to as a subscription manager discovery service (SM-DS), a discovery service (DS), a root SM-DS, or an alternative SM-DS. The provisioning mediation server may receive an event registration request (Register Event Request or Event Register Request) from one or more profile providing servers or provisioning mediation servers. One or more provisioning mediation servers may be used in a complex manner, in which case a first provisioning mediation server may receive an event registration request not only from a profile provisioning server but also from a second provisioning mediation server.

In the disclosure, the profile provisioning server and the provisioning mediation server may be referred to as a "remote SIM provisioning (RSP) server." The RSP server may be expressed as subscription manager XX (SM-XX).

In the disclosure, a "terminal" may be referred to as a mobile station (MS), a user equipment (UE), a user terminal (UT), a wireless terminal, an access terminal (AT), a terminal, a subscriber unit, a subscriber station (SS), a wireless device, a wireless communication device, a wireless transmit/receive unit (WTRU), a mobile node, a mobile, or other terms. In an embodiment, the terminal may include a cellular phone, a smartphone having a wireless communication function, a personal digital assistant (PDA) having a wireless communication function, a wireless modem, a portable computer having a wireless communication function, a photographing device, such as a digital camera, having a wireless communication function, a gaming device having a wireless communication function, a music storage and playback appliance having a wireless communication function, an Internet appliance capable of wireless Internet access and browsing, and portable units or terminals incorporating combinations of these functions. In addition, the terminal may include a machine-to-machine (M2M) terminal and a machine-type communication (MTC) terminal/device but is not limited thereto. In the disclosure, the terminal may also be referred to as an electronic device.

In the disclosure, an "electronic device" may include an embedded UICC capable of downloading and installing a profile. When the UICC is not embedded in the electronic device, the UICC physically separated from the electronic device may be inserted into the electronic device and connected to the electronic device. For example, the UICC may be inserted into the electronic device in a form of a card. The electronic device may include a UE. The UE may be a UE including a UICC capable of downloading and installing a profile. The UICC may be embedded in the UE, and in a case where the UE and the UICC are separated, the UICC may be inserted into the UE, and may be connected to the UE by being inserted into the UE. A UICC capable of downloading and installing a profile may be referred to as, for example, an eUICC.

In the disclosure, the UE or electronic device may include software or an application installed in the UE or electronic device to control the UICC or eUICC. The software or application installed in the UE or electronic device to control the UICC or eUICC may be referred to as, for example, a local profile assistant (LPA).

In the disclosure, a "profile distinguisher" may be referred to as a profile identifier (profile ID), an integrated circuit card ID (ICCID), a matching ID, an event identifier (event ID), an activation code, an activation code token, a command code, a command code token, a signed command code, an unsigned command code, or a factor matching an ISD-P or a profile domain (PD). A profile identifier (ID) may indicate a unique identifier of each profile. The profile distinguisher may further include an address of a profile provisioning server (SM-DP+) capable of indexing a profile. Further, the profile distinguisher may further include a signature of the profile provisioning server (SM-DP+).

In the disclosure, an "eUICC identifier (eUICC ID)" may be a unique identifier of an eUICC embedded in a UE, and may be referred to as an EID. Further, when a provisioning profile is preinstalled in the eUICC, the eUICC ID may be an identifier (profile ID) of the provisioning profile. In an embodiment of the disclosure, when the UE and the eUICC chip are not separated, the eUICC identifier (eUICC ID) may be a UE ID. The eUICC identifier (eUICC ID) may also refer to a specific secure domain in the eUICC chip.

In the disclosure, a "profile container" may be referred to as a profile domain. The profile container may be a security domain.

In the disclosure, an "application protocol data unit (APDU)" may be a message for a UE to interwork with an eUICC. Further, the APDU may be a message for a profile provider (PP) or a profile manager (PM) to interwork with the eUICC.

In the disclosure, "profile provisioning credentials (PPC)" may be a tool used for mutual authentication between a profile provisioning server and an eUICC, profile encryption, and signing. The PPC may include at least one of a symmetric key, a Rivest Shamir Adleman (RSA) certificate and a private key, an elliptic curved cryptography (ECC) certificate and a private key, a root certification authority (CA), and a certificate chain. When there is a plurality of profile providing servers, different PPC may be stored in the eUICC or used for each of the plurality of profile providing servers.

In the disclosure, "profile management credentials (PMC)" may be a tool used for mutual authentication between a profile management server and an eUICC, encryption of transmitted data, signing. The PMC may include at least one of a symmetric key, an RSA certificate and a private key, an ECC certificate and a private key, a root CA, and a certificate chain. When there is a plurality of profile management servers, different PMC may be stored in the eUICC or used for each of the plurality of profile management servers.

In the disclosure, an "AID" may be an application identifier. This value may be a distinguisher for distinguishing different applications in an eUICC.

In the disclosure, an "event" may be a generic term referring to profile download, remote profile management, or other management/processing commands for a profile or an eUICC. The event may be referred to as a remote SIM provisioning operation (or RSP operation) or an event record, and each event may be referred to as data including at least one of an event identifier (event ID or EventID) or matching identifier (matching ID or MatchingID) corresponding to the event, an address (FQDN, IP address, or URL) of a profile provisioning server (SM-DP+) or a provisioning mediation server (SM-DS) in which the event is stored, a signature of the profile provisioning server (SM-DP+) or the provisioning mediation server (SM-DS), and a digital certificate of the profile provisioning server (SM-DP+) or the provisioning mediation server (SM-DS).

Data corresponding to an event may be referred to as a "command code." Part or all of a procedure using the command code may be referred to as a "command code processing procedure," "command code procedure," or "local profile assistant application programming interface (LPA API)." Profile download may be interchangeably used with profile installation.

An "event type" may be a term used to indicate whether a specific event is profile download, remote profile management (e.g., deletion, activation, deactivation, replacement, and update), or other management/processing commands for a profile or an eUICC, and may be referred to as an operation type (or OperationType), an operation class (or OperationClass), an event request type, an event class, or an event request class. For an arbitrary event identifier (EventID or MatchingID), a path through which a UE has obtained the event identifier (EventID or MatchingID) or a use (EventID source or MatchingID source) may be specified.

In the disclosure, a "profile package" may be interchangeably used with a profile or be used as a term indicating a data object of a specific profile, and may be referred to as a profile TLV or a profile package TLV. A profile package that is encrypted using an encryption parameter may be referred to as a protected profile package (PPP) or a protected profile package TLV (PPP TLV). A profile package that is encrypted using an encryption parameter decodable only by a specific eUICC may be referred to as a bound profile package (BPP) or a bound profile package TLV (BPP TLV). A profile package TLV may be a data set representing information composing a profile in a tag-length-value (TLV) format.

In the disclosure, "local profile management (LPM)" may be referred to as "profile local management," "local management," a "local management command," a "local command," a "local profile management package (LPM package)," a "profile local management package," a "local management package," a "local management command package," or a "local command package." The LPM may be used to change a state (enabled, disabled, or deleted) of a specific profile or to change (update) content (e.g., profile nickname or profile metadata) of a specific profile. The LPM may include one or more local management commands, in which case a target profile for each local management command may be the same as or different from one another.

In the disclosure, "remote profile management (RPM)" may be referred to as "profile remote management," "remote management," a "remote management command," a "remote command," a "remote profile management package," a "profile remote management package," a "remote management package," a "remote management command package," or a "remote command package." The RPM may be used to change a state (enabled, disabled, or deleted) of a specific profile or to change (update) content (e.g., profile nickname or profile metadata) of a specific profile through software installed in a UE. The RPM may include one or more remote management commands, in which case a target profile for each remote management command may be the same as or different from one another.

In the disclosure, a "certificate" or "digital certificate" may refer to a digital certificate used for mutual authentication based on an asymmetric key including a pair of a public key (PK) and a secret key (SK). Each certificate may include one or more public keys (PKs), a public key identifier (PKID) corresponding to each public key, an ID (certificate issuer ID) of a certificate issuer (CI) that issued the certificate, and a digital signature.

A "certificate issuer" may be referred to as a certification issuer, a certificate authority (CA), or a certification authority.

In the disclosure, a "public key (PK)" and a "public key ID (PKID)" may be interchangeably used to refer to a specific public key or a certificate including the same, a portion of a specific public key or a portion of a certificate including the same, a calculation result (e.g., a hash value) of a specific public key or a calculation result (e.g., a hash value) of a certificate including the same, a calculation result (e.g., a hash value) of a portion of the specific public key or a calculation result (e.g., a hash value) of a portion of the certificate including the same, or a storage space in which data is stored.

In the disclosure, when certificates (first certificates) issued by a single certificate issuer are used to issue other certificates (second certificates) or when second certificates are used to sequentially issue third or higher-level certificates, a relationship between the certificates may be referred to as a certificate chain or a certificate hierarchy. Here, a CI certificate used to issue an initial certificate may be referred to as a root of certificate, a top-level certificate, a root CI, a root CI certificate, a root CA, or a root CA certificate.

In the disclosure, a "mobile operator" may refer to an entity that provides a communication service to a UE, and may generically refer to a business supporting system (BSS), an operational supporting system (OSS), a point-of-sale (POS) terminal, and other IT systems of the mobile operator. Further, in the disclosure, the mobile operator may not be limited to a specific entity that provides a communication service, but may be a term used to refer to a group or association (or consortium) of one or more entities, or a representative of the group or association. In the disclosure, the mobile operator may be referred to as an operator (OP or Op), a mobile network operator (MNO), a mobile virtual network operator (MVNO), a service provider (SP), or a profile owner (PO), and each mobile operator may have at least one mobile operator name and/or object identifier (OID) configured or allocated. When the mobile operator refers to a group or an association of one or more entities or a representative, a name or unique identifier of any group, association, or representative may be a name or unique identifier shared by all entities belonging to the group or association or by all entities cooperating with the representative.

In the disclosure, "AKA" may refer to authentication and key agreement, and may refer to an authentication algorithm for accessing 3GPP and 3GPP2 networks.

In the disclosure, "K" may be an encryption key value stored in an eUICC used for an AKA authentication algorithm.

In the disclosure, "OPC" may be a parameter value that may be stored in an eUICC used for an AKA authentication algorithm.

In the disclosure, an "NAA" is a network access application, and may be an application program, such as a USIM or an ISIM, stored in a UICC to access a network. The NAA may be a network access module.

In the disclosure, an "indicator" may be used for indicating that a particular function, configuration, or operation is required or not required, or used for indicating the function, configuration, or operation. In the disclosure, the indicator may be expressed in various forms, such as an alphanumeric string, an operator (boolean-TRUE or FALSE) indicating true/false, a bitmap, an array, or a flag, and other expressions having the same meaning may be interchangeably used.

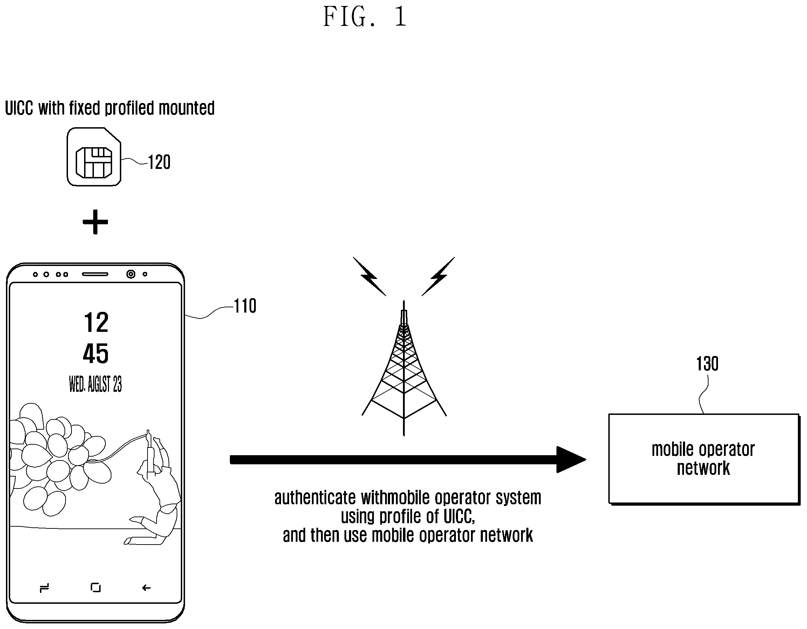

Hereinafter, a method and a device for installing and managing an eUICC profile of the disclosure will be described in detail with reference to FIG. 1 to FIG. 8.

FIG. 1 is a diagram illustrating a method in which a UE connects to a mobile communication network using a UICC in which a fixed profile is mounted in the UE according to an embodiment of the disclosure.

As illustrated in FIG. 1, a UICC 120 may be inserted into a UE 110. For example, the UICC 120 may be a detachable type or may be pre-embedded in the UE 110.

The fixed profile mounted in the UICC 120 may signify that "access information" for accessing a specific mobile carrier is fixed. For example, the access information may be an IMSI, which is a subscriber identifier, and a K or Ki value required for authentication to a network along with the subscriber identifier.

The UE 110 according to various embodiments may perform authentication with an authentication processing system (e.g., a home location register (HLR) or AuC) of a mobile communication operator by using the UICC 120. For example, an authentication process may be an authentication and key agreement (AKA) process. When the authentication is successful, the UE 110 may use a mobile communication service, such as a call or mobile data, through a mobile operator network 130 of a mobile communication system.

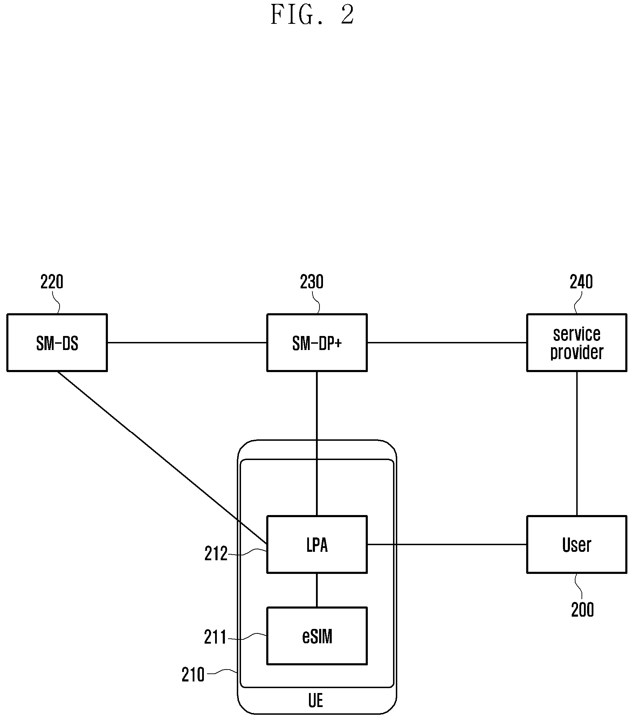

FIG. 2 is a diagram illustrating an example of a connection between a UE, a provisioning mediation server, a profile provisioning server, and a service provider according to an embodiment of the disclosure.

As illustrated in FIG. 2, an eSIM 211 may be mounted in a UE 210, and a profile (not shown) may be installed in an eSIM 211. Further, an LPA 212 may be installed in the UE 210. The eSIM 211 may be controlled by the LPA 212. A user 200 may install a profile in the eSIM 211 of each UE or control an installed profile through the LPA 212.

The user 200 may be provided with a communication service from a service provider (hereinafter, "mobile operator" or "operator") 240. To this end, the UE 210 may have a profile (not shown) of the operator 240 installed therein.

The operator 240 is connected to a profile server 230, and the LPA 212 of the UE 210 may be connected to the profile server 230 and a subscription manger 220. For convenience, although FIG. 2 shows a case where the profile server 230 and the provisioning mediation server 220 each are configured as a single server, one or more profile servers (SM-DP+) may be included in a server configuration, and one or more provisioning mediation servers (SM-DS) that assist in establishing a connection between a specific profile server and the UE may also be included in the server configuration according to implementation or an embodiment. It should be noted that various server configurations may be shown simply as a single profile server in the following drawings. Specific operations of the user 200, the operator 240, the UE 210, the eSIM 211, the LPA 212, the profile server 230, and the provisioning mediation server 220 according to an embodiment of the disclosure and message exchange procedures therebetween will be described in detail with reference to the following drawings.

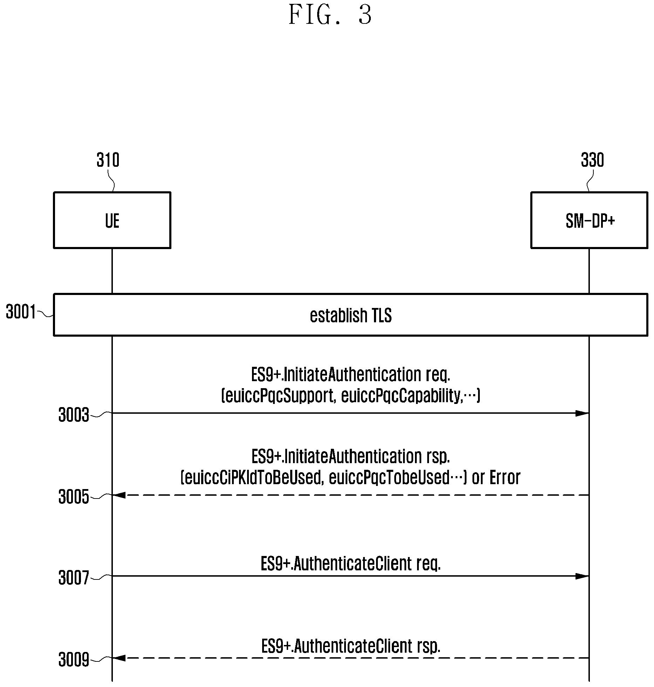

FIG. 3 is a sequence diagram illustrating an example of a procedure in which a UE performs a capability negotiation with a profile server to download a profile according to an embodiment of the disclosure.

FIG. 3 illustrates a procedure in which a UE 310 provides information on at least one post-quantum cryptography (PQC)-related capability supported by the UE 310 to a profile server 330 while performing a mutual authentication process with the profile server 330, and the profile server 330 selects a PQC-related capability supported thereby from among capabilities provided by the UE 310 and replies to the UE 310.

For a configuration and description of the UE 310 and the profile server 330 in FIG. 3, FIG. 2 is referenced. For example, the UE 310 and the profile server 330 illustrated in FIG. 3 may respectively correspond to the UE 210 and the profile server 230 in FIG. 2.

Referring to FIG. 3, in operation 3001, an LPA of the UE 310 may establish a transport layer security (TLS) connection with the profile server 330 to be accessed for transferring the profile.

In operation 3003, the UE 310 may initiate a mutual authentication process with the profile server 330. Here, mutual authentication may be certificate-based mutual authentication in which an eSIM (or eUICC) of the UE 310 and a provisioning mediation server authenticate each other using an asymmetric key including a pair of a public key (PK) and a secret key (SK). The UE 310 may transmit a mutual authentication initiation request to the profile server 330 through an ES9+.InitiateAuthentication request message. The mutual authentication initiation request may selectively include at least one of information (euiccInfo1) about the eSIM installed in the UE 310 or information (lpaRspCapability) about the LPA. The mutual authentication initiation request may include information (euiccPqcCapability) about at least one post-quantum cryptography (PQC)-related capability supported by the eSIM installed in the UE 310. For example, the information on the post-quantum cryptography-related capability may selectively include at least one of information (euiccPqcSupport) indicating that the eSIM provides a post-quantum cryptography-related capability, at least one post-quantum cryptography scheme (e.g., ML-KEM, ML-DSA, Crystal-Kyber, Crystal-Dilithium, FALCON, and SPHINCS+) supported by the eSIM, and one or more parameters used in each post-quantum cryptography scheme.

In an embodiment, the post-quantum cryptography scheme may include a key exchange scheme or a session key establishment scheme using post-quantum cryptography, and may be a key encapsulation mechanism (KEM), a key agreement protocol, or the like. For example, the key encapsulation mechanism may include a module-lattice-based key-encapsulation mechanism, a Ctystal-Kyber mechanism, or the like.

In an embodiment, the post-quantum cryptography scheme or the parameters for each cryptography scheme may be included in a form of an object identifier (OID) that uniquely refers to the corresponding value.

In an embodiment, the information on the post-quantum cryptography-related capability may selectively include a hybrid scheme support identifier when the eSIM supports a hybrid key exchange scheme or a hybrid key establishment scheme that combines the elliptic curve cryptography (ECC) scheme supported by the eSIM of the UE 310 and the profile server 330 with a post-quantum cryptography (PQC) scheme.

In an embodiment, the information (euiccPQcCapability) about the post-quantum cryptography (PQC)-related capability may be included in the information (euiccInfo1) about the eSIM installed in the UE 310 or the information (lpaRspCapability) about the LPA and transmitted to the profile server 330. In addition, an identifier (euiccPqcSupport) indicating that the eSIM provides the post-quantum cryptography-related capability may be included in the information (euiccInfo1) about the eSIM installed in the UE 310 or the information (lpaRspCapability) about the LPA, separately from the at least one post-quantum cryptography scheme supported by the eSIM and the at least one parameter used in each post-quantum cryptography scheme.

In operation 3005, the profile server 330 may transmit a mutual authentication initiation response to the UE 310 in response to the mutual authentication initiation request of the UE 310. The mutual authentication initiation response may be transmitted using an ES9+.InitiateAuthentication response message. The mutual authentication initiation response may include information (serverRspCapability or sessionContext) about the profile server 330. Further, the mutual authentication initiation response may include at least one of a signature generated by the profile server 330 and a digital certificate of the profile server 330 for verifying the signature, and a corresponding certificate chain.

In an embodiment, the profile server 330 may determine whether the profile server 330 supports at least one of the at least one post-quantum cryptography scheme (e.g., ML-KEM, ML-DSA, Crystal-Kyber, Crystal-Dilithium, FALCON, SPHINCS+, and the like) supported by the eSIM installed in the UE 310 and the at least one parameter used in each post-quantum cryptography scheme, which are transmitted from the UE 310. The profile server 330 may include at least one post-quantum cryptography scheme and parameter commonly supported by the UE 310 and the profile server 330 in information on post-quantum cryptography (euiccPqcToBeUsed) to be used by the eSIM of the UE 310, and may transmit the same to the UE 310 via the mutual authentication initiation response. A selected post-quantum cryptography scheme or a parameter for each cryptography scheme may be included in a form of a unique identifier (object identifier (OID)) indicating a corresponding value. When the UE 310 includes a hybrid scheme support identifier and the profile server 330 supports a hybrid scheme, the hybrid scheme support identifier may be included in the information on the post-quantum cryptography (euiccPqcToBeUsed) to be used by the eSIM of the UE 310.

In an embodiment, the profile server 330 may further include information on elliptic curve cryptography (euiccPKIdToBeUsed) to be used by the eSIM of the UE 310.

In an embodiment, when there is no post-quantum cryptography scheme or parameter commonly supported by the UE 310 and the profile server 330 or when the information (euiccPqcCapability) about the at least one post-quantum cryptography (PQC)-related capability supported by the eSIM installed in the UE 310 is not transmitted in operation 3003, the profile server 330 may not transmit the information on the post-quantum cryptography (euiccPqcToBeUsed) to be used by the eSIM of the UE 310, or may reply with an error ("Error").

In an embodiment, upon receiving the mutual authentication initiation response, the UE 310 may verify the information transmitted by the profile server 330. The LPA of the UE 310 may request the eSIM installed in the UE to verify the information transmitted by the profile server 330. The request may be made using an ES10b.AuthenticateServer message. The eSIM of the UE 310 may identify the post-quantum cryptography scheme, the parameter, and/or the hybrid scheme support identifier included in the information on the post-quantum cryptography (euiccPqcToBeUsed) to be used by the eSIM of the UE 310 transmitted by the profile server 330, and may determine whether the eSIM supports the scheme selected by the profile server 330. When the eSIM of the UE 310 does not support the scheme selected by the profile server 330, the eSIM may generate an error. When the eSIM of the UE 310 supports the post-quantum cryptography scheme, the parameter, and/or the hybrid scheme included in the information on the post-quantum cryptography (euiccPqcToBeUsed) to be used by the eSIM of the UE 310 transmitted by the profile server 330, the eSIM of the UE 310 may store or configure the corresponding value to be used for a connection with the profile server 330.

In operation 3007, the UE 310 may transmit a client authentication request to the profile server 330. The client authentication request may be transmitted via an ES9+.AuthenticateClient message. The client authentication request may include an identifier indicating a profile or a remote management command (RPM COMMAND) stored in the profile server 330. The identifier may be included in a matching ID data object or a ctxParamsForDeviceChange data object, and the corresponding value may include at least one of a signature of the eSIM installed in the UE 310, a digital certificate of the eSIM for verifying the signature, and a corresponding certificate chain.

In operation 3009, the profile server 330 may transmit a client authentication response to the UE 310 in response to the client authentication request from the UE 310. The client authentication response may be an ES9+.AuthenticateClient response.

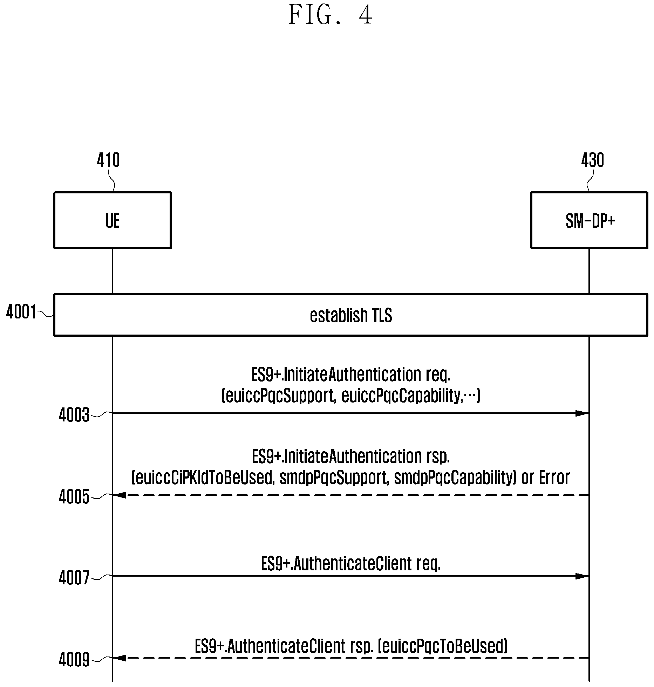

FIG. 4 is a sequence diagram illustrating an example of a procedure in which a UE performs a capability negotiation with a profile server to download a profile according to an embodiment of the disclosure.

FIG. 4 illustrates a procedure in which a UE 410 provides information on at least one post-quantum cryptography (PQC)-related capability supported by the UE 410 to a profile server 430 while performing a mutual authentication process with the profile server 430, and the profile server 430 selects a PQC-related capability supported thereby from among capabilities provided by the UE 410 and replies to the UE 410.

For a configuration and description of the UE 410 and the profile server 430 in FIG. 4, FIG. 2 is referenced. For example, the UE 410 and the profile server 430 illustrated in FIG. 4 may respectively correspond to the UE 210 and the profile server 230 in FIG. 2.

Referring to FIG. 4, in operation 4001, an LPA of the UE 410 may establish a transport layer security (TLS) connection with the profile server 430 to be accessed for transferring the profile.

In operation 4003, the UE 410 may initiate a mutual authentication process with the profile server 430. Here, mutual authentication may be certificate-based mutual authentication in which an eSIM (or eUICC) of the UE 410 and a provisioning mediation server authenticate each other using an asymmetric key including a pair of a public key (PK) and a secret key (SK). The UE 410 may transmit a mutual authentication initiation request to the profile server 430 through an ES9+.InitiateAuthentication request message. The mutual authentication initiation request may selectively include at least one of information (euiccInfo1) about the eSIM installed in the UE 410 or information (lpaRspCapability) about the LPA. The mutual authentication initiation request may include information (euiccPqcCapability) about at least one post-quantum cryptography (PQC)-related capability supported by the eSIM installed in the UE 410. For example, the information on the post-quantum cryptography-related capability may selectively include at least one of information (euiccPqcSupport) indicating that the eSIM provides a post-quantum cryptography-related capability, one or more post-quantum cryptography schemes (e.g., ML-KEM, ML-DSA, Crystal-Kyber, Crystal-Dilithium, FALCON, and SPHINCS+) supported by the eSIM, and one or more parameters used in each post-quantum cryptography scheme.

In an embodiment, the post-quantum cryptography scheme may include a key exchange scheme or a session key establishment scheme using post-quantum cryptography, and may be a key encapsulation mechanism (KEM), a key agreement protocol, or the like. For example, the key encapsulation mechanism may include a module-lattice-based key-encapsulation mechanism, a Ctystal-Kyber mechanism, or the like.

In an embodiment, the post-quantum cryptography scheme or the parameters for each cryptography scheme may be included in a form of an object identifier (OID) that uniquely refers to the corresponding value.

In an embodiment, the information on the post-quantum cryptography-related capability may selectively include a hybrid scheme support identifier when the eSIM supports a hybrid key exchange scheme or a hybrid key establishment scheme that combines the elliptic curve cryptography (ECC) scheme supported by the eSIM of the UE 410 and the profile server 430 with a post-quantum cryptography (PQC) scheme.

In an embodiment, the information (euiccPQcCapability) about the post-quantum cryptography (PQC)-related capability may be included in the information (euiccInfo1) about the eSIM installed in the UE 410 or the information (lpaRspCapability) about the LPA and transmitted to the profile server 430. In addition, an identifier (euiccPqcSupport) indicating that the eSIM provides the post-quantum cryptography-related capability may be included in the information (euiccInfo1) about the eSIM installed in the UE 410 or the information (lpaRspCapability) about the LPA, separately from the at least one post-quantum cryptography scheme supported by the eSIM and the at least one parameter used in each post-quantum cryptography scheme.

In operation 4005, the profile server 430 may transmit a mutual authentication initiation response to the UE 410 in response to the mutual authentication initiation request of the UE 410. The mutual authentication initiation response may be transmitted using an ES9+.InitiateAuthentication response message. The mutual authentication initiation response may include information (smdpPqcCapability or serverPqcCapability) about at least one post-quantum cryptography (PQC)-related capability supported by the profile server 430. For example, the information on the post-quantum cryptography-related capability may selectively include at least one of information (smdpPqcSupport or serverPqcSupport) indicating that the profile server 430 provides a post-quantum cryptography-related capability, at least one post-quantum cryptography scheme (e.g., ML-KEM, ML-DSA, Crystal-Kyber, Crystal-Dilithium, FALCON, and SPHINCS+) supported by the profile server, and one or more parameters used in each post-quantum cryptography scheme.

In an embodiment, the post-quantum cryptography scheme may include a key exchange scheme or a session key establishment scheme using post-quantum cryptography, and may be a key encapsulation mechanism (KEM), a key agreement protocol, or the like. For example, the key encapsulation mechanism may include a module-lattice-based key-encapsulation mechanism, a Ctystal-Kyber mechanism, or the like.

In an embodiment, the post-quantum cryptography scheme or the parameters for each cryptography scheme may be included in a form of an object identifier (OID) that uniquely refers to the corresponding value.

In an embodiment, the information on the post-quantum cryptography-related capability may selectively include a hybrid scheme support identifier when the profile server 430 supports a hybrid key exchange mechanism or a hybrid key establishment mechanism that combines an elliptic curve cryptography (ECC) scheme supported by the eSIM of the UE 410 and the profile server 430 with a post-quantum cryptography (PQC) scheme.

In an embodiment, the information on the post-quantum cryptography (PQC)-related capability may be included in information (serverRspCapability or sessionContext) about the profile server 430 and transmitted to the UE 410. The profile server 430 may further include information on elliptic curve cryptography (euiccPKIdToBeUsed) to be used by the eSIM of the UE 410 in the information on the post-quantum cryptography-related capability.

In an embodiment, when there is no post-quantum cryptography scheme or parameter commonly supported by the UE 410 and the profile server 430 or when the information (euiccPqcCapability) about the at least one post-quantum cryptography (PQC)-related capability supported by the eSIM installed in the UE 410 is not transmitted in operation 4003, the profile server 430 may reply with an error ("error").

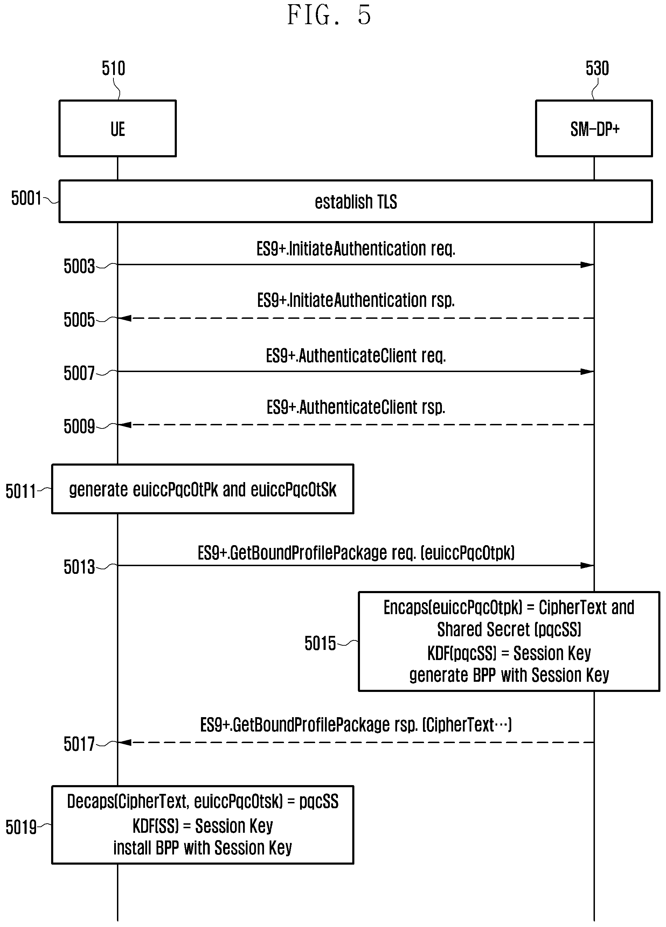

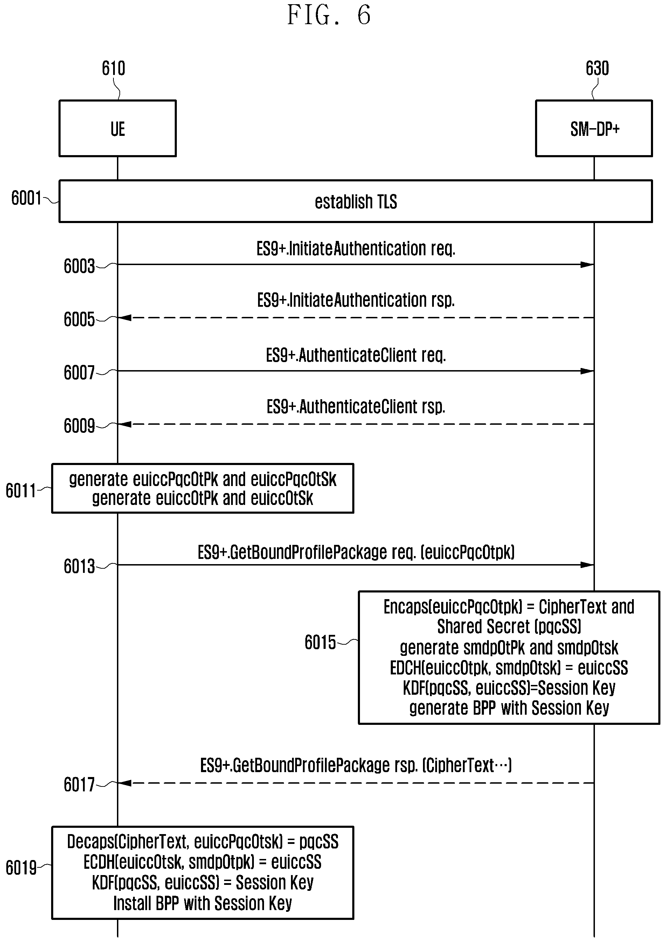

In an embodiment, upon receiving the mutual authentication initiation response, the UE 410 may selectively verify the information transmitted by the profile server 430. The LPA of the UE 410 may request the eSIM installed in the UE to verify the information transmitted by the profile server 430. The request may be made using an ES10b.AuthenticateServer message. The eSIM of the UE 410 may identify the post-quantum cryptography scheme, the parameter, and/or the hybrid scheme support identifier included in the information (smdpPqcCapability or serverPqcCapability) about the post-quantum cryptography (PQC)-related capability transmitted by the profile server 430, and may determine whether the eSIM supports the scheme transmitted by the profile server 430. When the eSIM of the UE 410 does not support at least one of the schemes transmitted by the profile server 430, the eSIM may generate an error. When the eSIM is able to support at least one of the schemes provided by the profile server 430, the following procedure of FIG. 5 or FIG. 6 may be performed. Further, the foregoing verification operation may be omitted, and the procedure of FIG. 5 or FIG. 6 may be performed.

In operation 4007, the UE 410 may transmit a client authentication request to the profile server 430. The client authentication request may be transmitted via an ES9+.AuthenticateClient message. The client authentication request may include an identifier indicating a profile or a remote management command (RPM COMMAND) stored in the profile server 430. The identifier may be included in a matching ID data object or a ctxParamsForDeviceChange data object, and the corresponding value may include at least one of a signature of the eSIM installed in the UE 410, a digital certificate of the eSIM for verifying the signature, and a corresponding certificate chain.

In operation 4009, the profile server 430 may transmit a client authentication response to the UE 410 in response to the client authentication request from the UE 410. The client authentication response may be an ES9+.AuthenticateClient response.

In an embodiment, the profile server 430 may determine whether the profile server 430 supports at least one of the at least one post-quantum cryptography scheme (e.g., ML-KEM, ML-DSA, Crystal-Kyber, Crystal-Dilithium, FALCON, SPHINCS+, and the like) supported by the eSIM installed in the UE 410 and the at least one parameter used in each post-quantum cryptography scheme, which are transmitted from the UE 410. The profile server 430 may include at least one post-quantum cryptography scheme and parameter commonly supported by the UE 410 and the profile server 430 in information on post-quantum cryptography (euiccPqcToBeUsed) to be used by the eSIM of the UE 410, and may transmit the same to the UE 410 via the client authentication initiation response. A selected post-quantum cryptography scheme or a parameter for each cryptography scheme may be included in a form of a unique identifier (object identifier (OID)) indicating a corresponding value. When the UE 410 includes a hybrid scheme support identifier and the profile server 430 supports a hybrid scheme, the hybrid scheme support identifier may be included in the information on the post-quantum cryptography (euiccPqcToBeUsed) to be used by the eSIM of the UE 410.

In an embodiment, upon receiving the mutual authentication initiation response, the UE 410 may verify the information transmitted by the profile server 430. The LPA of the UE 410 may request the eSIM installed in the UE to verify the information transmitted by the profile server 430. The request may be made using an ES10b.PrepareDownload message. The eSIM of the UE 410 may identify the post-quantum cryptography scheme, the parameter, and/or the hybrid scheme support identifier included in the information on the post-quantum cryptography (euiccPqcToBeUsed) to be used by the eSIM of the UE 410 transmitted by the profile server 430, and may determine whether the eSIM supports the scheme selected by the profile server 430. When the eSIM of the UE 410 does not support the scheme selected by the profile server 430, the eSIM may generate an error. When the eSIM of the UE 410 supports the post-quantum cryptography scheme, the parameter, and/or the hybrid scheme included in the information on the post-quantum cryptography (euiccPqcToBeUsed) to be used by the eSIM of the UE 410 transmitted by the profile server 430, the eSIM of the UE 410 may store or configure the corresponding value to be used for a connection with the profile server 430.

FIG. 5 is a sequence diagram illustrating an example of a procedure in which a UE configures a session key with a profile server to download a profile according to an embodiment of the disclosure.

Referring to FIG. 5, a UE 510 may generate a temporary UE public key and a temporary UE private key by using a post-quantum cryptography scheme for use by both ends, which is determined through a mutual authentication process described above with reference to FIG. 3 or 4 with a profile server 530, and/or a parameter for the cryptography scheme, and may transmit the temporary UE public key to the profile server 530. The profile server 530 may generate a shared secret and a session key by using the transmitted temporary UE public key. Further, the profile server 530 may encrypt information that enables the UE 510 to generate the same shared secret by using the temporary UE public key, thereby generating ciphertext. The profile server 530 may transmit the generated ciphertext to the UE 510. The UE 510 may decrypt the received ciphertext by using the temporary UE private key, thereby generating a shared secret and a session key that are the same as those of the profile server 530.

For a configuration and description of the UE 510 and the profile server 530 in FIG. 5, FIG. 2 is referenced. For example, the UE 510 and the profile server 530 illustrated in FIG. 5 may respectively correspond to the UE 210 and the profile server 230 in FIG. 2.

For operations 5001, 5003, 5005, 5007, and 5009 in FIG. 5, operations 3001, 3003, 3005, 3007, and 3009 in FIG. 3 or operations 4001, 4003, 4005, 4007, and 4009 in FIG. 4 may be referenced.

In operation 5011, the UE 510 may generate a pair of a temporary post-quantum cryptography UE public key (euiccPqcOtPk) and a temporary post-quantum cryptography UE private key (euiccPqcOtSk) by using a post-quantum cryptography scheme included in post-quantum cryptography information (euiccPqcToBeUsed) to be used by an eSIM of the UE 510 transmitted by the profile server 530 in operation 5005 (corresponding to operation 3005) or operation 5009 (corresponding to operation 4009). To generate the keys, an ML-KEM.KeyGen() function or a similar method may be used. When generating the temporary keys, the eSIM of the UE 510 may use a parameter included in the post-quantum cryptography information (euiccPqcToBeUsed) to be used by the eSIM of the UE 510.

In operation 5013, the UE 510 may transmit the temporary post-quantum cryptography UE public key (euiccPqcOtPk) generated by the eSIM of the UE 510 to the profile server 530. The temporary post-quantum cryptography UE public key may be included in an ES9+GetBoundProfilePacksage request transmitted by the UE 510 to the profile server 530. The request may include a signature generated by the eSIM of the UE 510.

In operation 5015, the profile server 530 may perform key encapsulation using the temporary post-quantum cryptography UE public key (euiccPqcOtPk) transmitted by the UE 510. The profile server 530 may verify the signature generated by the eSIM of the UE 510 before performing the key encryption, and may generate an error and transmit the same to the UE 510 when failing to verify the signature. When the signature is successfully verified, the profile server 530 may perform the key encapsulation. The key encapsulation may be performed using an ML-KEM.Encaps() function with the temporary post-quantum cryptography UE public key (euiccPqcOtPk) as an input value. The profile server 530 may generate ciphertext and a shared secret or a shared secret key as a result of the key encapsulation. The shared secret or the shared secret key may be generated using the temporary post-quantum cryptography UE public key. The key encapsulation may include a process in which the profile server 530 encrypts information that enables the UE 510 to generate the same shared secret by using the temporary post-quantum cryptography UE public key to generate ciphertext. The profile server 530 may use the parameter included in the post-quantum cryptography information (euiccPqcToBeUsed) to be used by the eSIM of the UE 510 transmitted by the profile server 530 in operation 5005 (corresponding to operation 3005) or in operation 5009 (corresponding to operation 4009).

In an embodiment, the profile server 530 may generate a session key by using a key derivation function (KDF) with the shared secret as an input. The profile server 530 may encrypt a profile package to be transmitted to the UE 530 with the session key, thereby generating a bound profile package (BPP). Encryption of the profile package may refer to a process of encrypting an encryption key of the profile package already encrypted with the session key and including the encryption key in the profile package.

In operation 5017, the profile server 530 may transmit the ciphertext generated in operation 5015 to the UE 510. The ciphertext may be included in an ES9+GetBoundProfilePackage response transmitted by the profile server 530 to the UE 510. The response may include at least one of the BPP generated by the profile server 530, a signature or a digital certificate of the profile server 530 capable of verifying the same, and a corresponding certificate chain.

In operation 5019, the UE 510 may perform key decapsulation of decrypting the ciphertext transmitted from the profile server 530 in operation 5017 to obtain the shared secret key. The key decapsulation may be performed by the eSIM of the UE 510. The UE 510 or the eSIM of the UE 510 may verify the signature generated by the profile server 530 before performing the key decapsulation, and may generate an error when failing to verify the signature. When the signature is successfully verified, the UE 510 or the eSIM of the UE 510 may perform the key decapsulation. For the key decapsulation, an ML-KEM.Decaps() function may be used. The UE 510 or the eSIM of the UE 510 may generate a shared secret or a shared secret key as a result of the key decapsulation. The key decapsulation may be performed using, as input values, the temporary post-quantum cryptography UE private key (euiccPqcOtSk) paired with the temporary post-quantum cryptography UE public key (euiccPqcOtPk), generated by the UE 510 in operation 5011 and transmitted to the profile server 530 in operation 5013, and the ciphertext transmitted from the profile server 530. The key decapsulation may include a process in which the UE 510 or the eSIM of the UE 510 decrypts the ciphertext by using the temporary post-quantum cryptography UE private key to identify the information for generating the same shared secret as that of the profile server 530. The UE 510 or the eSIM of the UE 510 may generate the same shared secret as the shared secret generated by the profile server 530 in operation 5015 by using at least one of the decrypted information for generating the shared secret and the temporary post-quantum cryptography UE public key. In addition, the UE 510 or the eSIM of the UE 510 may use the parameter included in the post-quantum cryptography information (euiccPqcToBeUsed) to be used by the eSIM of the UE 510 transmitted by the profile server 530 in operation 5005 (corresponding to operation 3005) or 5009 (corresponding to operation 4009).

In an embodiment, the UE 510 or the eSIM of the UE 510 may generate a session key by using a key derivation function (KDF) with the shared secret key as an input. The UE 510 or the eSIM of the UE 510 may decrypt the BPP by using the session key, and may install the BPP in the eSIM.

FIG. 6 is a sequence diagram illustrating an example of a procedure in which a UE configures a session key with a profile server to download a profile according to an embodiment of the disclosure.

Referring to FIG. 6, a UE 610 and a profile server 630 may use a post-quantum cryptography scheme for use by both ends, which is determined through a mutual authentication process described above with reference to FIG. 3 or 4, an elliptic curve cryptography scheme, and/or a parameter for the cryptography scheme. Based on a key encapsulation mechanism (KEM) using quantum cryptography asymmetric keys and a key agreement mechanism using elliptic curve cryptography asymmetric keys, the UE 610 and the profile server 630 may generate a PQC shared secret derived from common quantum asymmetric cryptography and an ECC shared secret derived from elliptic curve encryption, and may generate a common session key.

For a configuration and description of the UE 610 and the profile server 630 in FIG. 6, FIG. 2 is referenced. For example, the UE 610 and the profile server 630 illustrated in FIG. 6 may respectively correspond to the UE 210 and the profile server 230 in FIG. 2.

For operations 6001, 6003, 6005, 6007, and 6009 in FIG. 6, operations 3001, 3003, 3005, 3007, and 3009 in FIG. 3 or operations 4001, 4003, 4005, 4007, and 4009 in FIG. 4 may be referenced.

Operation 6011 and subsequent operations may be performed when the UE 610 includes a hybrid scheme support identifier in operation 6003 (corresponding to operation 3003 or 4003) or when the profile server 630 includes a hybrid scheme support identifier in post-quantum cryptography information (euiccPqcToBeUsed) to be used by an eSIM of the UE 610 in operation 6005 (corresponding to operation 3005 or 4005) or operation 6007 (corresponding to operation 4007).

In operation 6011, the UE 610 may generate a pair of a temporary post-quantum cryptography UE public key (euiccPqcOtPk) and a temporary post-quantum cryptography UE private key (euiccPqcOtSk) by using a post-quantum cryptography scheme included in the post-quantum cryptography information (euiccPqcToBeUsed) to be used by the eSIM of the UE 610 transmitted by the profile server 630 in operation 6005 (corresponding to operation 3005) or operation 6009 (corresponding to operation 4009). To generate the keys, an ML-KEM.KeyGen() function or a similar method may be used. When generating the temporary keys, the eSIM of the UE 610 may use a parameter included in the post-quantum cryptography information (euiccPqcToBeUsed) to be used by the eSIM of the UE 610.

In an embodiment, the UE 610 may generate a pair of a temporary elliptic curve cryptography UE public key (euiccOtPk) and a temporary elliptic curve cryptography UE private key (euiccOtSk) by using an elliptic curve cryptography parameter configured in a certificate including a public key matching s public key identifier included in elliptic curve cryptography information (euiccPKIdToBeUsed) to be used by the eSIM of the UE 610 transmitted by the profile server 630 in operation 6005 (corresponding to operation 3005 or 4005).

In operation 6013, the UE 610 may transmit the temporary post-quantum cryptography UE public key (euiccPqcOtPk) and the temporary elliptic curve cryptography UE public key (euiccOtPk) generated by the eSIM of the UE 610 to the profile server 630. The temporary UE public keys may be included in an ES9+GetBoundProfilePacksage request transmitted by the UE 610 to the profile server 630. The request may include a signature generated by the eSIM of the UE 610.

In operation 6015, the profile server 630 may perform key encapsulation using the temporary post-quantum cryptography UE public key (euiccPqcOtPk) transmitted by the UE 610. The profile server 630 may verify the signature generated by the eSIM of the UE 610 before performing the key encryption, and may generate an error and transmit the same to the UE 610 when failing to verify the signature. When the signature is successfully verified, the profile server 630 may perform the key encapsulation. The key encapsulation may be performed using an ML-KEM.Encaps() function with the temporary post-quantum cryptography UE public key (euiccPqcOtPk) as an input value. The profile server 630 may generate ciphertext and a shared secret key (PQC shared secret, shared secret for PQC, PQC shard secret key, shared secret key for PQC, or shared secret key) derived by post-quantum asymmetric cryptography as a result of the key encapsulation. The shared secret key derived by the post-quantum asymmetric cryptography may be generated using the temporary post-quantum cryptography UE public key. The key encapsulation may include a process in which the profile server 630 encrypts information that enables the UE 610 to generate the same shared secret key derived by the post-quantum asymmetric cryptography by using the temporary post-quantum cryptography UE public key to generate ciphertext. The profile server 630 may use the parameter included in the post-quantum cryptography information (euiccPqcToBeUsed) to be used by the eSIM of the UE 610 transmitted by the profile server 630 in operation 6005 (corresponding to operation 3005) or in operation 6009 (corresponding to operation 4009).

In an embodiment, the profile server 630 may perform key agreement using the temporary elliptic curve cryptography UE public key (euiccOtPk) transmitted by the UE 610. The profile server 630 may verify the signature generated by the eSIM of the UE 610 before performing the key agreement, and may generate an error and transmit the same to the UE 610 when failing to verify the signature. When the signature is successfully verified, the profile server 630 may perform the key agreement. The key agreement may be performed using a Diffie-Hellman key exchange scheme using elliptic curve cryptography (e.g., elliptic-curve Diffie-Hellman (ECDH)). The profile server 630 may generate a pair of a temporary elliptic curve cryptography (ECC) server public key (smdpOtPk) and a temporary elliptic curve cryptography server private key (smdpOtSk), and may generate a shared secret key (ECC shared secret, shared secret for ECC, ECC shared secret key, shared secret key for ECC, or shared secret key) derived by elliptic curve cryptography using the temporary elliptic curve cryptography UE public key provided by the eSIM of the UE 610 through the elliptic curve Diffie-Hellman key exchange scheme and the temporary elliptic curve cryptography server private key.

In an embodiment, the profile server 630 may generate a session key by using a key derivation function (KDF) with the shared secret key derived by the quantum asymmetric cryptography and the shared secret key derived by the elliptic curve cryptography as inputs. The profile server 630 may encrypt a profile package to be transmitted to the UE 630 with the session key, thereby generating a bound profile package (BPP). Encryption of the profile package may refer to a process of encrypting an encryption key of the profile package already encrypted with the session key and including the encryption key in the profile package.

In operation 6017, the profile server 630 may transmit the ciphertext and the temporary elliptic curve cryptography server public key generated in operation 6015 to the UE 510. The ciphertext and the temporary elliptic curve cryptography server public key may be included in an ES9+GetBoundProfilePackage response transmitted by the profile server 630 to the UE 610. The response may include at least one of the BPP generated by the profile server 630, a signature or a digital certificate of the profile server 630 capable of verifying the same, and a corresponding certificate chain.

In operation 6019, the UE 610 may perform key decapsulation of decrypting the ciphertext transmitted from the profile server 630 in operation 6017 to obtain the shared secret key derived by the quantum asymmetric cryptography. The key decapsulation may be performed by the eSIM of the UE 610. The UE 610 or the eSIM of the UE 610 may verify the signature generated by the profile server 630 before performing the key decapsulation, and may generate an error when failing to verify the signature. When the signature is successfully verified, the UE 610 or the eSIM of the UE 610 may perform the key decapsulation. For the key decapsulation, an ML-KEM.Decaps() function may be used. The UE 610 or the eSIM of the UE 610 may generate a shared secret key derived by the quantum asymmetric cryptography as a result of the key decapsulation. The key decapsulation may be performed using, as input values, the temporary post-quantum cryptography UE private key (euiccPqcOtSk) paired with the temporary post-quantum cryptography UE public key (euiccPqcOtPk), generated by the UE 610 in operation 6011 and transmitted to the profile server 610 in operation 6013, and the ciphertext transmitted from the profile server 630. The key decapsulation may include a process in which the UE 610 or the eSIM of the UE 610 decrypts the ciphertext by using the temporary post-quantum cryptography UE private key to identify the information for generating the same shared secret derived by the post-quantum asymmetric cryptography as that of the profile server 630. The UE 610 or the eSIM of the UE 610 may generate the same shared secret as the shared secret generated by the profile server 630 in operation 6015 by using at least one of the decrypted information for generating the shared secret key derived by the post-quantum asymmetric cryptography and the temporary post-quantum cryptography UE public key. In addition, the UE 610 or the eSIM of the UE 610 may use the parameter included in the post-quantum cryptography information (euiccPqcToBeUsed) to be used by the eSIM of the UE 610 transmitted by the profile server 630 in operation 6005 (corresponding to operation 3005) or 6009 (corresponding to operation 4009).

In an embodiment, in operation 6019, the UE 610 may perform key agreement of deriving the shared secret key derived by the elliptic curve cryptography using the temporary elliptic curve cryptography server public key transmitted from the profile server 630 in operation 6017. The key agreement may be performed by the eSIM of the UE 610. The UE 610 or the eSIM of the UE 610 may verify the signature generated by the profile server 630 before performing the key agreement, and may generate an error when failing to verify the signature. When the signature is successfully verified, the UE 610 or the eSIM of the UE 610 may perform key decryption. The key agreement may be performed using a Diffie-Hellman key exchange scheme using elliptic curve cryptography (e.g., elliptic-curve Diffie-Hellman (ECDH)). The key exchange may be performed using, as input values, the temporary elliptic curve cryptography UE private key (euiccOtSk) paired with the temporary elliptic curve cryptography UE public key (euiccOtPk), generated by the UE 610 in operation 6011 and transmitted to the profile server 610 in operation 6013, and the temporary elliptic curve cryptography server public key (smdpOtPk) transmitted from the profile server 630. The UE 610 or the eSIM of the UE 610 may generate the shared secret key derived by the elliptic curve cryptography as a result of the key agreement.

In an embodiment, the UE 610 or the eSIM of the UE 610 may generate a session key by using a key derivation function (KDF) with the shared secret key derived by the quantum asymmetric cryptography and the shared secret key derived by the elliptic curve cryptography as inputs. The UE 610 or the eSIM of the UE 610 may decrypt the BPP by using the session key, and may install the BPP in the eSIM.

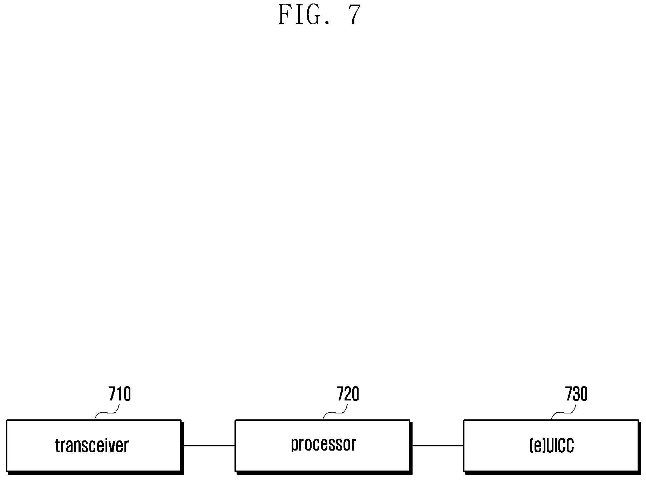

FIG. 7 is a block diagram illustrating components of a UE according to an embodiment of the disclosure.

As illustrated in FIG. 7, the UE may include a transceiver 710 and a controller (or processor) 720. Further, the UE may include a UICC 730. For example, the UICC 730 may be inserted into the UE, or may be an eUICC embedded in the UE.

The transceiver 710 may transmit and receive a signal, information, and data to and from a profile server.

The processor 720 is a component for controlling the UE overall. The processor 720 may control an overall operation of the UE according to various embodiments of the disclosure. The processor 720 may be referred to as a controller. According to an embodiment of the disclosure, the processor 720 may include at least one processor.

According to an embodiment of the disclosure, the at least one processor may control the transceiver to transmit a first message including information on a PQC-related capability supported by an eSIM of the UE to the profile server, and may control the transceiver to receive a second message including PQC information to be used by the eSIM from the profile server in response to the first message. The UICC 730 according to an embodiment of the disclosure may download and install a profile. Further, the UICC 730 may manage a profile.

The UICC 730 may operate under control of the processor 720. Alternatively, the UICC 730 may include a processor or a controller for installing a profile, or may have an application installed. Part of the application may be installed in the processor 720.

The UE may further include a storage (not illustrated), which may store data, such as a basic program, an application programs, and configuration information for an operation of the UE. The storage may include at least one storage medium of a flash memory type, a hard disk type, a multimedia card micro type, a card-type memory (e.g., an SD or XD memory), a magnetic memory, a magnetic disk, an optical disk, a random access memory (RAM), a static random access memory (SRAM), a read-only memory (ROM), a programmable read-only memory (PROM), and an electrically erasable programmable read-only memory (EEPROM). The processor 720 may perform various operations by using various programs, content, and data stored in the storage.

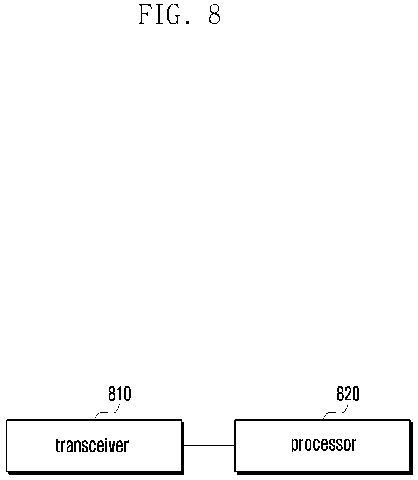

FIG. 8 is a block diagram illustrating components of a profile server according to an embodiment of the disclosure.

Referring to FIG. 8, a profile server may include a transceiver 810 and a controller (or processor) 820.

The transceiver 810 may transmit and receive a signal, information, and data to and from a UE, a provisioning mediation server, and an operator.

The processor 820 is a component for controlling the profile server overall. The processor 820 may control an overall operation of the profile server according to various embodiments of the disclosure. The processor 820 may be referred to as a controller. According to an embodiment of the disclosure, the processor 820 may include at least one processor.

According to an embodiment of the disclosure, the at least one processor may control the transceiver to receive a first message including information on a PQC-related capability supported by an eSIM of a UE from the UE, and may control the transceiver to transmit a second message including PQC information to be used by the eSIM to the UE in response to the first message.

The profile server may further include a storage (not illustrated), which may store data, such as a basic program, an application programs, and configuration information for an operation of the profile server. The storage may include at least one storage medium of a flash memory type, a hard disk type, a multimedia card micro type, a card-type memory (e.g., an SD or XD memory), a magnetic memory, a magnetic disk, an optical disk, a random access memory (RAM), a static random access memory (SRAM), a read-only memory (ROM), a programmable read-only memory (PROM), and an electrically erasable programmable read-only memory (EEPROM). The processor 820 may perform various operations by using various programs, content, and data stored in the storage.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

It should be appreciated that the embodiments and the terms used therein are not intended to limit the technological features set forth herein to particular embodiments and the disclosure includes various changes, equivalents, and/or alternatives for a corresponding embodiment. With regard to the description of the drawings, similar reference numerals may be used to designate similar or relevant elements. A singular expression may include a plural expression unless they are definitely different in a context. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such expressions as "a first", "a second", "the first", and "the second" may modify corresponding elements regardless of the order or importance thereof, and may be used to simply distinguish a corresponding element from the other elements and does not limit the corresponding elements. When an element (e.g., a first element) is referred to, with or without the term "operatively" or "communicatively", as "coupled with/to" or "connected with/to" another element (e.g., a second element), the element may be coupled/connected with/to the other element directly or via another element (e.g., a third element).

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments of the disclosure may be implemented as software (e.g., a program) including instructions that are stored in a storage medium (e.g., an internal memory or external memory) that is readable by a machine (e.g., a computer). The machine is a device that can invoke the stored instructions from the storage medium and operate according to the invoked instructions, and may include terminals according to various embodiments. When the instructions are executed by a processor (e.g., the processor 720 in FIG. 7 or the processor 820 in FIG. 8), the processor may perform functions corresponding to the instructions, with or without using other components under the control of the processor. The instructions may include a code generated or executed by a complier or an interpreter.

The machine-readable storage medium may be provided in the form of a non-transitory storage medium. Wherein, the term "non-transitory" simply means that the storage medium is a tangible device, and does not include a signal, but this term does not differentiate between where data is semi-permanently stored in the storage medium and where the data is temporarily stored in the storage medium.

Methods according to various embodiments of the disclosure may be included and provided in a computer program product. The computer program product may be traded as a product between a seller and a purchaser. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each element (e.g., a module or a program) according to various embodiments may include a single entity or multiple entities, some the above-described sub elements may be omitted, or other sub elements may be additionally included in various embodiments. Alternatively or additionally, some elements (e.g., modules or programs) may be integrated into a single entity. In such a case, the integrated entity may still perform the functions, which have been performed by each of the corresponding elements before the integration, in the same or similar manner. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A method performed by a terminal in a wireless communication system, the method comprising:
transmitting, to a profile server, a mutual authentication initiation request message including at least one of information indicating that an embedded universal integrated circuit card (eUICC) of the terminal supports post-quantum cryptography (PQC) or information on a PQC-related capability supported by the eUICC;
in response to the mutual authentication initiation request message, receiving, from the profile server, a mutual authentication initiation response message; and
based on the mutual authentication initiation response message, identifying a session key encryption scheme with the profile server.

2. The method of claim 1, wherein, in case that PQC information to be used is included in the mutual authentication initiation response message, the session key encryption scheme is identified as a scheme that is based on the PQC, and
wherein, in case that the PQC information to be used is not included in the mutual authentication initiation response message, the session key encryption scheme is identified as a scheme that is based on elliptic curve cryptography (ECC).

3. The method of claim 1, wherein the information on the PQC-related capability includes information indicating that the eUICC supports a hybrid encryption scheme using the PQC and elliptic curve cryptography (ECC) in combination.

4. The method of claim 3, wherein, in case that PQC information to be used is included in the mutual authentication initiation response message and information indicating that the hybrid encryption scheme is available is included in the PQC information to be used, the session key encryption scheme is identified as a scheme that is based on hybrid encryption, and
wherein, in case that the PQC information to be used is included in the mutual authentication initiation response message and the information indicating that the hybrid encryption scheme is available is not included in the PQC information to be used, the session key encryption scheme is identified as a scheme that is based on the PQC.

5. A method performed by a profile server in a wireless communication system, the method comprising:
receiving, from a terminal, a mutual authentication initiation request message including at least one of information indicating that an embedded universal integrated circuit card (eUICC) of the terminal supports post-quantum cryptography (PQC) or information on a PQC-related capability supported by the eUICC; and
in response to the mutual authentication initiation request message, transmitting, to the terminal, a mutual authentication initiation response message,
wherein a session key encryption scheme with the terminal is identified according to the mutual authentication initiation response message.

6. The method of claim 5, wherein, in case that PQC information to be used is included in the mutual authentication initiation response message, the session key encryption scheme is identified as a scheme that is based on the PQC, and
wherein, in case that the PQC information to be used is not included in the mutual authentication initiation response message, the session key encryption scheme is identified as a scheme that is based on elliptic curve cryptography (ECC).

7. The method of claim 5, wherein the information on the PQC-related capability includes information indicating that the eUICC supports a hybrid encryption scheme using the PQC and elliptic curve cryptography (ECC) in combination.

8. The method of claim 7, wherein, in case that PQC information to be used is included in the mutual authentication initiation response message and information indicating that the hybrid encryption scheme is available is included in the PQC information to be used, the session key encryption scheme is identified as a scheme that is based on hybrid encryption, and
wherein, in case that the PQC information to be used is included in the mutual authentication initiation response message and the information indicating that the hybrid encryption scheme is available is not included in the PQC information to be used, the session key encryption scheme is identified as a scheme that is based on the PQC.

9. A terminal in a wireless communication system, the terminal comprising:
a transceiver; and
a processor coupled with the transceiver and configured to:
transmit, to a profile server via the transceiver, a mutual authentication initiation request message including at least one of information indicating that an embedded universal integrated circuit card (eUICC) of the terminal supports post-quantum cryptography (PQC) or information on a PQC-related capability supported by the eUICC;
in response to the mutual authentication initiation request message, receive, from the profile server via the transceiver, a mutual authentication initiation response message; and
based on the mutual authentication initiation response message, identify a session key encryption scheme with the profile server.

10. The terminal of claim 9, wherein, in case that PQC information to be used is included in the mutual authentication initiation response message, the session key encryption scheme is identified as a scheme that is based on the PQC, and
wherein, in case that the PQC information to be used is not included in the mutual authentication initiation response message, the session key encryption scheme is identified as a scheme that is based on elliptic curve cryptography (ECC).

11. The terminal of claim 9, wherein the information on the PQC-related capability includes information indicating that the eUICC supports a hybrid encryption scheme using the PQC and elliptic curve cryptography (ECC) in combination.

12. The terminal of claim 11, wherein, in case that PQC information to be used is included in the mutual authentication initiation response message and information indicating that the hybrid encryption scheme is available is included in the PQC information to be used, the session key encryption scheme is identified as a scheme that is based on hybrid encryption, and
wherein, in case that the PQC information to be used is included in the mutual authentication initiation response message and the information indicating that the hybrid encryption scheme is available is not included in the PQC information to be used, the session key encryption scheme is identified as a scheme that is based on the PQC.

13. A profile server in a wireless communication system, the profile server comprising:
a transceiver; and
a processor coupled with the transceiver and configured to:
receive, from a terminal via the transceiver, a mutual authentication initiation request message including at least one of information indicating that an embedded universal integrated circuit card (eUICC) of the terminal supports post-quantum cryptography (PQC) or information on a PQC-related capability supported by the eUICC; and
in response to the mutual authentication initiation request message, transmit, to the terminal via the transceiver, a mutual authentication initiation response message, and
wherein a session key encryption scheme with the terminal is identified according to the mutual authentication initiation response message.

14. The profile server of claim 13, wherein, in case that PQC information to be used is included in the mutual authentication initiation response message, the session key encryption scheme is identified as a scheme that is based on the PQC, and
wherein, in case that the PQC information to be used is not included in the mutual authentication initiation response message, the session key encryption scheme is identified as a scheme that is based on elliptic curve cryptography (ECC).

15. The profile server of claim 13, wherein the information on the PQC-related capability includes information indicating that the eUICC supports a hybrid encryption scheme using the PQC and elliptic curve cryptography (ECC) in combination,
wherein, in case that PQC information to be used is included in the mutual authentication initiation response message and information indicating that the hybrid encryption scheme is available is included in the PQC information to be used, the session key encryption scheme is identified as a scheme that is based on hybrid encryption, and
wherein, in case that the PQC information to be used is included in the mutual authentication initiation response message and the information indicating that the hybrid encryption scheme is available is not included in the PQC information to be used, the session key encryption scheme is identified as a scheme that is based on the PQC.
